**Europäisches Patentamt**

**European Patent Office**

**Office européen des brevets**

(19)

(11) Veröffentlichungsnummer: **0 210 416**
**B1**

(12) **EUROPÄISCHE PATENTSCHRIFT**

(45) Veröffentlichungstag der Patentschrift:
30.08.89

(51) Int. Cl.⁴: **A 01 N 57/16** // (A01N57/16, 53:00)

(21) Anmeldenummer: 86108411.9

(22) Anmeldetag: 20.06.86

(54) Insektizid wirksames Mittel zur Bekämpfung von Textilschädlingen.

(30) Priorität: 18.07.85 DE 3525624

(43) Veröffentlichungstag der Anmeldung:
04.02.87 Patentblatt 87/06

(45) Bekanntmachung des Hinweises auf die Patenterteilung: 30.08.89 Patentblatt 89/35

(84) Benannte Vertragsstaaten:
AT BE CH DE FR GB IT LI LU NL SE

(56) Entgegenhaltungen:
EP--A-- 0 027 013
EP--A-- 0 027 326
DE--A-- 2 418 950
CHEMICAL ABSTRACTS, Band 95, 1981, Seite 254, Zusammenfassung Nr. 163915c, Columbus, Ohio, US; & JP-A-81 90 004 (EARTH CHEMICAL CO. LTD.) 21-07-1981

(73) Patentinhaber: SHELL INTERNATIONALE RESEARCH MAATSCHAPPIJ B.V.
Carel van Bylandtlaan 30
NL-2596 HR Den Haag (NL)

(72) Erfinder: Itzel, Hansheimut, Dr.
Im Herzenacker 51
D-6535 Gau-Algesheim (DE)
Erfinder: Drandarevski, Christo, Dr.
Boehringerstrasse 8
D-6507 Ingelheim am Rhein (DE)

(74) Vertreter: Bennett, David Arthur Horder et al
4, York Road
London SE1 7NA (GB)

**Beschreibung**

Die Erfindung betrifft eine neue Kombination insektizider Wirkstoffe sowie deren Verwendung als Mottenschutzmittel.

Es ist bekannt, den insektizid wirksamen Stoff Empenthrin (2,2-Dimethyl-3-(2-methyl-1-propenyl) cyclopropancarbonsäure-(1-ethinyl-2-methyl-2-pentenyl) ester) als Mottenschutzmittel zu verwenden (Jap. Patentanmeldung 81 75.411 ; Chemical Abstracts 95 P 163 915 c).

Des weiteren sind Mottenbekämpfungsmassnahmen, wie z. B. die Anwendung von Mottenpapieren oder Mottenstreifen mit den insektiziden Wirkstoffen Chlorpyrifos (O, O-Diethyl-O-3,5,6-trichlorpyrid-2-yl-thiophosphorsäureester) oder Chlorpyrifos-Methyl (O, O-Dimethyl-O-3,5,6-trichlorpyrid-2-yl-thiophosphorsäureester) bekannt.

Für eine wirksame Bekämpfung der Kleidermotte werden Mottenpapiere verwendet, die etwa 800 mg Chlorpyrifos oder Chlorpyrifos-Methyl oder etwa 700 mg Empenthrin je cbm Schrankvolumen enthalten.

Es ist auch bekannt, der Kombination von Chlorpyrifos und Permethrin (3-phenoxybenzyl (±)-cis-trans-2,2-dimethyl-3-(2,2-dichlorovinyl)cyclopropancarboxylat) als Mottenschutzmittel zu verwenden (EP-A-0 027 013). Weiter ist es auch bekannt, der Kombination von Chlorpyrifos und 2,2,3,3-Tetramethylcyclopropylcarbonsäure : Cyano(3-phenoxyphenyl)methylester als Mottenschutzmittel zu verwenden (EP-A-0 027 326).

Entgegen der landläufigen Meinung sind nicht die fliegenden Stadien (Falter), im allgemeinen Sprachgebrauch Motten genannt, die Primär-Schädlinge, sondern die Larven dieser Falter, die durch ihre rege Frasstätigkeit den allgemein bekannten « Mottenfrass » verursachen. Allerdings sind die Mottenfalter Sekundär-Schädlinge, da sie durch Eigelege die schädlichen Larven erzeugen. Wenig bekannt ist auch, dass die eierlegenden weiblichen Falter fast unbeweglich am Ort ihrer Entwicklung verbleiben, also nicht zufliegen.

Insofern ist es wünschenswert, bei Mottenbekämpfungsmassnahmen einerseits eine gute Bekämpfung der Mottenfalter, besonders am Anfang der Bekämpfungsmassnahmen zu haben, andererseits aber auch eine lang und dauernd anhaltende Bekämpfung der den Frass verursachenden Larven zu haben, die sich aus den abgelegten Eiern entwickeln, oder in den zu schützenden Raum einwandern.

Bei Massnahmen, die nur einen Wirkstoff als wirksames Prinzip verwenden, muss die Konzentration des Wirkstoffes über die erwünschte Bekämpfungsdauer immer das für die Bekämpfung der am wenigsten empfindlichen Stadien nötige Niveau besitzen, unabhängig davon, ob für die Bekämpfung der anderen Stadien die hohen Konzentrationen nötig sind oder nicht.

Ziel der erfindungsgemässen Mottenbekämpfungsmassnahme ist es, so wenig Wirkstoff einzusetzen, dass zu jedem Zeitpunkt der Massnahme nur die für das jeweilig vorhandene Schädlingsstadium nötige Wirkstoffkonzentration vorhanden ist. Für die Anfangsbekämpfung ist eine starke Wirkung gegen alle Stadien der Motten notwendig, damit sich diese nicht weiterentwickeln können ; die Dauerwirkung erfordert eine lang anhaltende Wirkung gegen die den Frass verursachenden entweder aus abgelegten Eiern entwickelten oder zuwandernden Larven.

Es wurde nun gefunden, dass einer Kombination von O, O-Diethyl-O,3,5,6-trichlorpyrid-2-yl-thiophosphorsäureester (Chlorpyrifos) oder O, O-Dimethyl-O-3,5,6-trichlorpyrid-2-yl-thiophosphorsäureester (Chlorpyrifos-Methyl) und 2,2-Dimethyl-3-(2-methyl-1-propenyl) cyclopropansäure-(1-ethinyl-2-methyl-2-pentenyl) ester (Empenthrin) vorteilhaft zur Bekämpfung der Entwicklungsstadien der Kleidermotte geeignet sind. Die Kombination ist synergistisch wirksam.

Vorteilhaft werden Kombinationen eingesetzt, die Chlorpyrifos oder Chlorpyrifos-Methyl in Konzentration 50-1 000 mg zusammen mit Empenthrin in Konzentration 10-700 mg pro cbm Anwendungsvolumen enthalten. Die absoluten Mengen und das Mengenverhältnis der Wirkstoffe richtet sich nach der gewünschten Dauer der Bekämpfungsmaßnahme und nach dem in den jeweiligen Klimaten vorherrschenden Schädlingsspektrum und Befallsdruck. Z. B. bei einer in der Regel gewünschten Bekämpfungsdauer von 6 Monaten ist das Verhältnis Chlorpyrifos/Empenthrin vorzugsweise 6 : 1 bis 2 : 1 und die absolute Menge an Chlorpyrifos, vorzugsweise 100 bis 500 mg. Es sind auch durchaus andere Bekämpfungsdauern möglich, wobei bei längeren die Wirkstoffkonzentration erhöht und bei kürzeren, die Wirkstoffkonzentration erniedrigt werden kann.

Die Erfindung betrifft somit ein Mottenschutzmittel bestehend aus Chlorpyrifos oder Chlorpyrifos-Methyl und Empenthrin. Die nachstehend angegebenen Versuchsergebnisse belegen den Synergismus der beanspruchten Kombination. Besonders hervorzuheben ist die starke Steigerung der Larvenmortalität und dadurch bedingt das vollständige Ausbleiben des Larvenfraßes und damit ein vollständiger Schutz der Kleidung gegen Mottenschaden.

Beispiel 1

Prüfmethode :

Papier mit der vorgegebenen Menge an Wirkstoff wird im Schrank mit einem definierten Volumen von 0,5 cbm eingebracht, in dem Textilien aus Wolle als Raumfüllung sich befinden. Gleichzeitig werden

2

Wollstreifen zur späteren Überprüfung der Wirkung eingebracht. Zu den Probenahme-Terminen werden auf abgeschnittene Stücke der Wollstreifen die Textilschädlinge gesetzt und nach 14 Stunden die Wirkung kontrolliert. Als Kontrolle werden unbehandelte Wollstreifen verwendet.

Lavenmortalität %

| Wirkstoff | Menge pro Papier | Wochen nach Einbringen des Wirkstoffpapiers | | |
|---|---|---|---|---|
| | | 1 | 5 | 9 |
| 1. Chlorpyrifos | 300 mg | 25 | 72 | 90 |
| 2. Chlorpyrifos | 200 mg | 0 | 0 | 33 |
| 3. Empenthrin | 100 mg | 0 | 0 | 0 |
| 4. Empenthrin | 50 mg | 25 | 0 | 4 |
| 5. Kombination Chlorpyrifos 300 mg + Empenthrin 100 mg | | 100 | 100 | 100 |
| 6. Kombination Chlorpyrifos 200 mg + Empenthrin 50 mg | | 100 | 100 | 100 |

Larvenfraß %

| Wirkstoff | Menge pro Papier | Wochen nach Einbringen des Wirkstoffpapiers | | |
|---|---|---|---|---|
| | | 1 | 5 | 9 |
| 1. Chlorpyrifos | 300 mg | 97 | 80 | 100 |
| 2. Chlorpyrifos | 200 mg | 50 | 100 | 100 |
| 3. Empenthrin | 100 mg | 100 | 100 | 100 |
| 4. Empenthrin | 50 mg | 100 | 100 | 100 |
| 5. Kombination Chlorpyrifos 300 mg + Empenthrin 100 mg | | 0 | 0 | 0 |
| 6. Kombination Chlorpyrifos 200 mg + Empenthrin 50 mg | | 0 | 0 | 0 |
| 7. Kontrolle | | 100 | 100 | 100 |

(Siehe Tabelle Seite 4 f.)

EP 0 210 416 B1

Faltermortalität in %

| Wirkstoff | Menge pro Papier | Wochen nach Einbringen des Wirkstoffpapiers | | |
|---|---|---|---|---|
| | | 1 | 5 | 9 |
| 1. Chlorpyrifos | 300 mg | 20 | 27 | 28 |
| 2. Chlorpyrifos | 200 mg | 21 | 27 | 17 |
| 3. Empenthrin | 100 mg | 100 | 93 | 63 |
| 4. Empenthrin | 50 mg | 100 | 40 | 26 |
| 5. Kombination Chlorpyrifos Empenthrin | 300 mg + 100 mg | 100 | 100 | 64 |
| 6. Kombination Chlorpyrifos Empenthrin | 200 mg + 50 mg | 100 | .13 | 66 |
| 7. Kontrolle | | 4 | 7 | 0 |

**Patentansprüche**

1. Mottenschutzmittel zur Bekämpfung der Entwicklungsstadien der Kleidermotte, bestehend aus einer Kombination von O,O-Diethyl-O-3,5,6-trichlorpyrid-2-yl-thiophosphorsäureester (Chlorpyrifos) oder O,O-Dimethyl-O-3,5,6-trichlorpyrid-2-yl-thiophosphorsäureester (Chlorpyrifos-Methyl) und 2,2-Dimethyl-3-(2-methyl-1-propenyl) cyclopropancarbonsäure-(1-ethinyl-2-methyl-2-pentenyl)ester (Emphenthrin).

2. Mottenschutzmittel nach Anspruch 1, dadurch gekennzeichnet, dass es 50-1 000 mg Chlorpyrifos oder Chlorpyrifos-Methyl und 10-700 mg Emphenthrin je Kubikmeter Anwendungsvolumen enthält.

3. Mottenschutzmittel nach Anspruch 1 oder 2, enthaltend Chlorpyrifos Emphenthrin im Verhältnis 6 : 1 bis 2 : 1 oder enthaltend Chlorpyrifos-Methyl und Emphenthrin im Verhaltnis 6 : 1 bis 2 : 1.

4. Mottenschutzmittel nach Anspruch 1 bis 3, enthaltend einen Träger, bestehend aus Papier, Pappe, textilem Material, Vliesstoff oder Kunststoff.

5. Verfahren zur Bekämpfung der Kleidermotte, dadurch gekennzeichnet, dass ein Mottenschutzmittel nach Anspruch 1 bis 4 auf den Lebensraum der Kleidermotte oder deren Larve einwirkt.

6. Verwendung eines Mottenschutzmittels nach Anspruch 1 bis 4 zur Bekämpfung der Kleidermotte.

**Claims**

1. Moth repellent to control the developmental stages of the clothes moth, comprised of a combination of O,O-diethyl-O-3,5,6-trichloropyrid-2-yl-thiophosphoric acid ester (chlorpyrifos) or O,O-dimethyl-O-3,5,6-trichloropyrid-2-yl-thiophosphoric acid ester (chlorpyrifos-methyl) and 2,2-dimethyl-3-(2-methyl-1-propenyl)-cyclopropane carboxylic acid-(1-ethinyl-2-methyl-2-pentenyl)-ester (emphenthrin).

2. Moth repellent as claimed in claim 1, characterized in that it contains 50-1 000 mg chlorpyrifos or chlorpyrifos-methyl and 10-700 mg emphenthrin per cubic metre of volume used.

3. Moth repellent according to claims 1 and 2, containing chlorpyrifos and emphenthrin in a ratio of 6 : 1 to 2 : 1, or containing chlorpyrifos-methyl and emphenthrin in a ratio of 6 : 1 to 2 : 1.

4. Moth repellent as claimed in claims 1 to 3, comprised of a carrier consisting of paper, cardboard, a textile material, a bonded-fibre fabric or plastic.

5. Process to control the clothes moth, characterized in that a moth repellent as claimed in claims 1 to 4 will affect the living environment of clothes moths or their larvae.

6. Use of a moth repellent as claimed in claims 1 to 4, to control clothes moths.

**Revendications**

1. Agent antimites pour lutter contre les stades de développement des mites des vêtements, constitué par une combinaison de l'ester O,O-diéthyl-O-3,5,6-trichloropyrid-2-yl de l'acide thiophosphorique (Chlorpyrifos) ou de l'ester O,O-diméthyl-O-3,5,6-trichloropyrid-2-yl de l'acide thiophosphorique

4

(Chlorpyrifos-méthyle) et de l'ester 1-éthinyl-2-méthyl-2-pentényl de l'acide 2,2-diméthyl-3-(2-méthyl-1-propényl) cyclopropane carboxylique (Emphenthrine).

2. Agent antimites selon la revendication 1, caractérisé en ce qu'il contient 50 à 1 000 mg de Chlorpyrifos ou de Chlorpyrifos-méthyle et 10 à 700 mg par mètre cube de volume d'utilisation.

3. Agent antimites selon la revendication 1 ou 2, contenant du Chlorpyrifos et de l'Emphenthrine dans un rapport 6 : 1 à 2 : 1 ou contenant du Chlorpyrifos-méthyle et de l'Emphenthrine dans un rapport 6 : 1 à 2 : 1.

4. Agent antimites selon les revendications 1 à 3, contenant un support constitué de papier, de carton, de matériau textile non tissé ou d'une matière synthétique.

5. Procédé pour lutter contre les mites des vêtements, caractérisé en ce que l'on fait réagir l'agent antimites selon les revendications 1 à 4 dans l'environnement où se trouve la mite des vêtements ou sa larve.

6. Utilisation d'un agent antimites selon les revendications 1 à 4 pour la lutte contre les mites des vêtements.